# EUROPEAN PATENT SPECIFICATION

(11) **EP 2 480 344 B1**
(45) Date of publication and mention of the grant of the patent: **22.01.2014**
(21) Application number: 10773970.8
(22) Date of filing: 21.09.2010
(51) Int. Cl.: B60C 1/00, C08K 5/20, C09D 109/08, C08L 9/08, C09D 121/00

(54) **POLYMER COATING FOR TIRE APPLICATION**
POLYMERBESCHICHTUNG ZUR AUFBRINGUNG AUF REIFEN
REVÊTEMENT POLYMÈRE POUR UNE APPLICATION POUR PNEU

(30) Priority: 21.09.2009 IT TO20090717
(43) Date of publication of application: 01.08.2012
(73) Proprietor: Bridgestone Corporation, Chuo-ku Tokyo 104-8340 (JP)
(72) Inventor: COTUGNO, Salvatore, I-00131 Roma (IT); STRAFFI, Paolo, I-00149 Roma (IT)
(74) Representative: Bosman, Cesare
(86) International application number: PCT/IB2010/002360
(87) International publication number: WO 2011/033380

(56) References cited:
- EP-A2- 0 341 186
- EP-A2- 0 902 046
- WO-A2-2009/071562
- DE-A1-102004 005 132
- US-A- 4 329 265
- US-A- 4 370 412

## Description

The present invention relates to a polymer coating for tyres. More specifically, the present invention relates to a polymer coating that can be used as a tyre repair mix, to which the following description refers purely by way of example.

### BACKGROUND ART

Tyre repair mixes are normally produced in Banbury mixers, which involves at least two mixing steps : a longer, high-temperature first mixing step to produce the main mix, and in which ingredients such as carbon black, silica, a silane bonding agent, zinc oxide, stearic acid, wax, antioxidants, etc. are added and mixed with the polymer base; and a cooler second mixing step to complete the main mix, and in which curing agents, such as sulphur and accelerating agents are added to the mix from the first step. This is necessary to ensure dispersion of the' curing agents at a temperature that does not cause premature curing of the mix. The resulting mix is then extruded into the required shape.

Though effective, repair mixes of the type described have the drawbacks of being energy-intensive to produce, and having to be stored prior to use.

That is, because of the way they are prepared, these mixes must be stored for more or less long periods of time before they are actually used, which therefore calls for storage management and facilities, and may also impair the characteristics and jeopardize use of the mix.

The Applicant has surprisingly discovered a polymer coating made from a water emulsion, and which may also be used as a repair mix.

### DISCLOSURE OF INVENTION

According to the present invention, there is provided a polymer coating for tyres, made from a water emulsion comprising at least a cross-linkable polymer base, curing agents, and a surface-active agent of molecular formula (I)

(R₁CONR₂CHR₃COO⁻) n Xⁿ⁺ (I)

where :
R₁ is an aliphatic group C₆-C₂₃,
R₂ is H or an aliphatic group C₁-C₈,
R₃ is H or an aliphatic or aromatic group C₁-C₈,
X is a metal cation, preferably an alkaline cation, and
n is an integer of 1 to 3.

The aliphatic group R₁ preferably comprises a double bond.

The surface-active agent preferably has a molecular formula in the group comprising :

CH₃ (CH₂)₇CHCH(CH₂)₇CONHCH₂COO⁻ X⁺,

and

CH₂CH(CH₂)₈CONHCH₂COO⁻ X⁺

Preferably, X⁺ is Na⁺.

The following are purely non-limiting examples for a clear understanding of the invention.

### EXAMPLES

In the following examples, two surface-active agents (a, b) in the class according to the present invention were used :
- a surface-active agent (a) of molecular formula CH₃ (CH₂)₇CHCH(CH₂)₇CONHCH₂COO⁻ Na⁺;
- a surface-active agent (b) of molecular formula CH₂CH(CH₂)₈CONHCH₂COO⁻ Na⁺.

### Emulsions A and B

Two water emulsions (A and B), using respective surface-active agents (a) and (b) of molecular formula (I), were prepared.

Table I shows the compositions in phr of the water emulsion ingredients.

**TABLE I**

| | A | B |
|---|---|---|
| POLYMER BASE | 100 | |
| CARBON BLACK | 40 | |
| ZnO | 2 | |
| S | 2 | |
| ACCELERATING AGENT | 2 | |
| SURFACE-ACTIVE AGENT (a) | 2 | -- |
| SURFACE-ACTIVE AGENT (b) | -- | 2 |

The polymer base was S-SBR; the carbon black was N660; and the accelerating agent was TBBS.

The emulsions were produced by dispersing all the ingredients in Table I simultaneously in 1 litre of water. The resulting aqueous solution was stirred mechanically for 30 minutes, and then sonicated for 15 minutes to obtain a water emulsion.

The above method of producing the water emulsions is in no way to be inferred as a limiting aspect of the present invention.

### Laboratory testing

The water emulsions produced as described above were sprayed or brushed onto a surface, and the mixes obtained following evaporation of the water were test cured at different temperatures. More specifically, the rheometric properties of each mix were tested as per ISO Standard 6502.

Table II shows the rheometric property results. Quantities MH and ML are expressed in dNm, and T10 and T90 in minutes. The curing tests were performed at temperatures of 145°C, 160°C, 175°C and 195°C.

**TABLE II**

| | A₁ | B₁ |
|---|---|---|
| 145 °C | | |
| ML | 2.02 | 1.95 |
| MH | 21.06 | 20.96 |
| T10 | 13.28 | 14.6 |
| T90 | 24.21 | 25.45 |

| 160 °C | | |
|---|---|---|
| ML | 1.76 | 1.72 |
| MH | 21.35 | 20.83 |
| T10 | 4.52 | 4.96 |
| T90 | 11.12 | 11.27 |

| 175 °C | | |
|---|---|---|
| ML | 1.51 | 1.52 |
| MH | 21.38 | 20.73 |
| T10 | 1.54 | 1.8 |
| T90 | 5.44 | 5.69 |

| 195 °C | | |
|---|---|---|
| ML | 1.4 | 1.37 |
| MH | 20.61 | 20.13 |
| T10 | 0.54 | 0.6 |
| T90 | 2.14 | 2.25 |

As anyone skilled in the art can see from the results in Table II, the rheometric and physical characteristics of the mixes made from the water emulsions according to the present invention in no way differ from those of conventional repair mixes, thus ensuring an effective repair coat. Moreover, the mixes made from the water emulsions according to the present invention can be cured rapidly, which is a major advantage when using the mixes on an already cured substrate.

Another important point to note is that, using the water emulsions according to the present invention, very thin coats can be formed, by spraying or brushing on the water emulsion and allowing the water to evaporate, to repair tyres with no increase in tyre weight.

### Emulsions C, D and E

Another three emulsions were produced, all containing the ingredients of emulsion A, but differing from the latter as regards the content of carbon black. Testing the mixes with different carbon black concentrations is necessary to determine performance of the polymer coatings according to the present invention when applied to different tyre parts with different mechanical characteristics.

Table III shows the compositions in phr of the water emulsion ingredients.

**TABLE III**

| | C | D | E |
|---|---|---|---|
| POLYMER BASE | 100 | | |
| CARBON BACK | 10 | 20 | 30 |
| ZnO | 2 | | |
| S | 2 | | |
| ACCELERATING AGENT | 2 | | |
| SURFACE-ACTIVE AGENT (a) | 2 | | |

The characteristics of the ingredients are as shown in Table I.

### Laboratory testing

The water emulsions so formed were sprayed or brushed onto a surface, the rheometric properties of the mixes obtained following evaporation of the water were tested as per ISO Standard 6502 at a temperature of 160°C, and the physical properties (extensibility EB, ultimate tensile stress TB, modulus M%) were tested as per ISO Standard 37.

The results are shown in Table IV.

**TABLE IV**

| | C | D | E |
|---|---|---|---|
| TB (MPa) | 5,8 | 8,3 | 18,1 |
| M25% (MPa) | 0,31 | 0,48 | 0,64 |
| M50% (MPa) | 0,49 | 0,66 | 0,95 |
| M100% (MPa) | 0,77 | 0,89 | 1,49 |
| M200% (MPa) | 1,15 | 1,21 | 2,72 |
| M300% (MPa) | 1,54 | 1,58 | 4,43 |
| M400% (MPa) | 2,06 | 2,09 | 6,53 |
| M500% (MPa) | 2,88 | 2,94 | 8,84 |
| EB (%) | 660 | 760 | 880 |
| ML (dN) | 1,76 | 1,88 | 2,17 |
| MH (dN) | 6,32 | 3,41 | 7,6 |
| T10 (min) | 0,15 | 0,14 | 0,13 |
| T50 (min) | 0,74 | 0,66 | 0,86 |
| T90 (min) | 1,9 | 1,95 | 2,98 |

The results in Table IV confirm those in Table II. In this case, too, the rheometric and physical characteristics of the mixes made from water emulsions C, D and E correspond with those of conventional mixes.

The major advantage of the present invention lies in enabling unscheduled, low-energy production of polymer coatings for tyre repair or embellishment. The polymer coatings according to the present invention therefore eliminate mix storage problems, and greatly reduce energy consumption as a whole, thus also reducing CO₂ emissions.

The coatings according to the present invention also enable very thin coats of polymer material to be applied, with no impairment in effectiveness, unlike the extrusion process to which known mixes are subjected, which is unable to form overly thin layers for the technical reasons known to anyone skilled in the art.

Finally, using water emulsions, polymer layers can be applied (sprayed or brushed on) much more easily and effectively than known polymer layers.

## Claims

1. A polymer tyre coating made from a water emulsion comprising at least a cross-linkable polymer base, curing agents, and a surface-active agent of molecular formula (I)
(R₁CONR₂CHR₃COO⁻) n Xⁿ⁺ (I)
were :
R₁ is an aliphatic group C₆-C₂₃,
R₂ is H or an aliphatic group C₁-C₈,
R₃ is H or an aliphatic or aromatic group C₁-C₈,
X is a metal cation, and
n is an integer of 1 to 3.

2. A polymer tyre coating as claimed in Claim 1, **characterized in that** the aliphatic group R₁ comprises a double bond.

3. A polymer tyre coating as claimed in Claim 2, **characterized by** having a molecular formula in the group comprising :
CH₃ (CH₂)₇CHCH(CH₂)₇CONHCH₂COO⁻ X⁺,
and
CH₂CH (CH₂)₈CONHCH₂COO⁻ X⁺.

4. A polymer tyre coating as claimed in one of the foregoing Claims, **characterized in that** X⁺ is Na⁺.

5. Use of the polymer coating, as claimed in one of the foregoing Claims, as a tyre repair mix.

6. Use of the polymer coating, as claimed in one of Claims 1 to 4, as a tyre embellisher.

7. A tyre applied with the polymer coating as claimed in one of Claims 1 to 4.

## Patentansprüche

1. Polymere Reifenbeschichtung, hergestellt aus einer Wasseremulsion, umfassend mindestens eine vernetzbare Polymerbasis, Härtungsmittel und ein oberflächenaktives Mittel der Molekularformel (I)
(R₁CONR₂CHR₃COO⁻)ₙXⁿ⁺¹ (I)
wobei
R₁ eine aliphatische C₆-C₂₃-Gruppe ist,
R₂ H oder eine aliphatische C₁-C₈-Gruppe ist,
R₃ H oder eine aliphatische oder aromatische C₁-C₈-Gruppe ist,
X ein Metallkation ist und
n eine ganze Zahl von 1 bis 3 ist.

2. Polymere Reifenbeschichtung nach Anspruch 1, **dadurch gekennzeichnet, dass** die aliphatische Gruppe R₁ eine Doppelbindung umfasst.

3. Polymere Reifenbeschichtung nach Anspruch 2, **gekennzeichnet durch** das Aufweisen einer Molekularformel aus der Gruppe, umfassend:
CH₃(CH₂)₇CHCH(CH₂)CONHCH₂COO⁻X⁺
und
CH₂CH(CH₂)₈CONHCH₂COO⁻X⁺.

4. Polymere Reifenbeschichtung nach einem der vorangehenden Ansprüche, **dadurch gekennzeichnet dass** X⁺ Na⁺ ist.

5. Verwendung der polymeren Beschichtung nach einem der vorangehenden Ansprüche als Reifenreparaturgemisch.

6. Verwendung der polymeren Beschichtung nach einem der vorangehenden Ansprüche als Reifenverzierung.

7. Reifen, auf welchem die polymere Beschichtung nach einem der Ansprüche 1 bis 4 aufgetragen ist.

## Revendications

1. Revêtement polymère pour bandage pneumatique préparé à partir d'une émulsion aqueuse comprenant au moins une base polymère réticulable, des durcisseurs, et un agent tensioactif de formule moléculaire (I)
(R₁CONR₂CHR₂COO⁻) n Xⁿ⁺ (I)
dans laquelle :
R₁ représente un groupe aliphatique en C₆ à C₂₃,
R₂ représente H ou un groupe aliphatique en C₁ à C₈,
R₃ représente H ou un groupe aliphatique ou aromatique en C₁ à C₈,
X représente un cation métallique, et
n représente un nombre entier de 1 à 3.

2. Revêtement polymère pour bandage pneumatique suivant la revendication 1, **caractérisé en ce que** le groupe aliphatique R₁ comprend une double liaison.

3. Revêtement polymère pour bandage pneumatique suivant la revendication 2, **caractérisé par** une formule moléculaire dans le groupe comprenant :
CH₃(CH₂)₇CHCH(CH₂)₇CONHCH₂COO⁻ X⁺,
et
CH₂CH(CH₂)₈CONHCH₂COO⁻ X⁺.

4. Revêtement polymère pour bandage pneumatique suivant l'une des revendications précédentes, **caractérisé en ce que** X⁺ représente Na⁺.

5. Utilisation du revêtement polymère suivant l'une des revendications précédentes, comme mélange pour réparation de bandage à pneumatiques.

6. Utilisation du revêtement polymère suivant l'une des revendications 1 à 4, comme agent d'embellissement de bandage à pneumatiques.

7. Bandage pneumatique auquel a été appliqué le revêtement polymère suivant l'une des revendications 1 à 4.
